# EUROPEAN PATENT APPLICATION

(11) **EP 1 538 358 A1**
(43) Date of publication of application: **08.06.2005**
(21) Application number: 04102480.3
(22) Date of filing: 03.06.2004
(51) Int. Cl.: F16D 7/08, F16D 43/206, F16D 25/08

(54) **Adjustable torque transmission mechanism, especially for a laminar sheet materials conveyor device**

(30) Priority: 04.12.2003 ES 200302858
(71) Applicant: Ibérica A.G., S.A., 08820 El Prat de Llobregat (ES)
(72) Inventor: Montserrat Carbonell, Marc, 08201 Mataro (ES); Bermudez Perez, Ramon, 08026 Barcelona (ES)
(74) Representative: Ponti Sales, Adelaida

(57) **Abstract**

It comprises a main shaft (1) attached to a transmission element (2) that imparts an intermittent rotary movement to the main shaft (1), a positioning plate (8) attached to the main shaft (1), a drive sprocket (9) attached to a transmission shaft (4) of the sheet conveyor device, and a coupling device (13,14,19,20) able to transmit the movement of the positioning plate (8) to the drive sprocket (9). It is characterised in that the coupling device is a hydraulic and/or pneumatic proportional clutch which includes a pressure chamber (13) fed with a fluid and/or gas at a constantly adjustable pressure (P) by means of a hydraulic and/or pneumatic exterior circuit, a piston (14) that moves in response to said pressure (P), and means of engaging or disengaging the clutch (19,20) associated with the piston (14), the positioning plate (8) and the drive sprocket (9), in such a way that the clutch permits at all times delivery of the torque required in function of the main shaft's (1) movement.

## Description

This invention relates to an adjustable torque transmission mechanism, especially for a laminar sheet materials conveyor device, of the type that comprises a main shaft attached to a transmission element that imparts an intermittent rotary movement to the main shaft, a positioning plate attached to the main shaft, a drive sprocket attached to a transmission shaft of the sheet conveyor device, and a coupling device able to transmit the movement of the positioning plate to the drive sprocket.

### BACKGROUND OF THE INVENTION

Known in the art are various devices for limiting the torque to be transmitted at a shaft. Such devices differ greatly in their constructional design and applications, with mechanical, hydraulic, pneumatic and electrical devices being known. Some of them are designed only to transmit constantly a single maximum torque value, while others alter the maximum torque value to be transmitted depending on the shaft rotation speed.

Known in the case of mechanisms for controlling the torque to be transmitted to laminar sheet materials conveyor devices on graphic arts die-cutting machines are coupling devices such as clutches that include mechanical systems which use springs as a basis for setting up forces on means carrying out a linkage function between the clutch and the transmission shaft.

Such clutches are set to a constant torque value, irrespective of the real requirements of the transmission shaft. In such an arrangement, the set clutch torque is the maximum value required by the mechanism. That value occurs when the sheet conveyor device is operating at its peak rate. If the rate of the mechanism reduces, the torque to be transmitted would have to reduce in proportion to the rotation rate, but as the latter is fixed the maximum torque value is maintained.

In such a situation, if the laminar materials conveyor device rotates at a speed lower than the maximum and interference arises in the sheet conveying movement, the safety clutch will not carry out the declutching functions until such time as the interference reaches a torque value exceeding the maximum set value. This situation leads to increased replacement time and the possibility that the interference cannot produce the maximum torque required and the clutch does not disconnect the transmission, with the attendant problems of breakage of pieces.

### DESCRIPTION OF THE INVENTION

The objective of the adjustable torque transmission mechanism of this invention, especially for a laminar sheet materials conveyor device is to solve the disadvantages presented by the mechanisms known in the art, while providing a number of advantages which will be disclosed below.

The adjustable torque transmission mechanism of this invention, especially for a laminar sheet materials conveyor device, is characterised in that the coupling device is a hydraulic and/or pneumatic proportional clutch which includes a pressure chamber fed with a fluid and/or gas at a constantly adjustable pressure by means of a hydraulic and/or pneumatic exterior circuit, a piston that moves in response to said pressure, and means of engaging or disengaging the clutch associated with the piston, the positioning plate and the drive sprocket, in such a way that the clutch permits at all times delivery of the torque required in function of the main shaft's movement.

Owing to the fact that the movement of the main shaft is variable in speed within its 360° rotation, this sets up variations of sinusoidal type, so that the torque to be transmitted varies in accordance with said parameters.

The hydraulic and/or pneumatic proportional clutch of the invention manages to provide the torque that needs to be transmitted to the unit made up of the drive sprocket and transmission shaft of the sheet conveyor device at various rotation speeds within the 360°.

According to one embodiment of this invention, the drive sprocket is mounted freely rotating on one end of the main shaft, by means of a rolling element.

Preferably, the positioning plate is placed in a cavity that exists between said drive sprocket and one end of the transmission shaft.

Also preferably, the positioning plate and the drive sprocket are arranged adjacent to one another.

According to another aspect of the invention, the pressure chamber of the proportional clutch is fed via a conduit, through which the fluid and/or gas is introduced at the required pressure.

Advantageously, the pressure chamber includes leaktightness means to avoid pressure leakages therein.

Preferably, the clutch engaging and disengaging means of the proportional clutch include a load transmitting element mounted so as to rotate freely in a groove made in the piston, and a plurality of linking elements fitted in contact with said load transmitting element.

The load transmitting element has the task of transmitting a force onto the linking elements coming from the pressure generated in the chamber, while at the same time rotating about itself and thereby avoiding the piston having to rotate as the force is transmitted.

Also preferably, said linking elements are respectively housed in as many through-orifices made in the drive sprocket.

Advantageously, the positioning plate includes a plurality of housings machined in the surface oriented towards the drive sprocket, in such a way that the linking elements can slot into their respective housings.

Due to this structural arrangement, the positioning plate is attached to the drive sprocket.

Also advantageously, the housings are distributed along the surface of the positioning plate.

The position, shape and number of housings depends on the stress to be transmitted and the desired sensitivity to be obtained.

This housings distribution is especially designed such that there is only one linkage position between the main shaft and the drive sprocket.

Preferably, the main shaft rotates resting on first and second rolling elements.

Advantageously, the second rolling element is fixed by means of a locking element, thus preventing possible lateral movements of the mechanism.

In accordance with another aspect of the invention, the rest of the pressure chamber is made up of a casing.

Preferably, the casing includes a housing for fitting of the main shaft's second rolling element.

Additionally, the casing is attached to a bedplate.

Advantageously, the transmission shaft is attached at one end to the drive sprocket and by the other end to a second drive sprocket. This three-piece unit has the task of transmitting the movement to the laminar sheet materials conveyor device.

Preferably, there is another rolling element at the other end of the transmission shaft which carries out support functions on a bedplate.

Advantageously, the drive sprockets actuate drive chains bearing clamp bars that drag the sheets of laminar materials.

### BRIEF DESCRIPTION OF THE DRAWINGS

In order to facilitate the description of the matters set out above, some drawings are attached which show, schematically and solely by way of non-restrictive example, a practical case of embodiment of the adjustable torque transmission mechanism of the invention, especially for a laminar sheet materials conveyor device, in which:
Figure 1 is an axial section view of the transmission mechanism showing the proportional clutch in its engaged position and the transmission shaft of the sheet conveyor device;
Figure 2 is an axial section view of the proportional clutch, in its position of engagement with the transmission shaft, together with an enlarged view of the coupling zone; and
Figure 3 is an axial section view of the proportional clutch, in its position of disengagement from the transmission shaft, together with an enlarged view of the decoupling zone.

### DESCRIPTION OF A PREFERRED EMBODIMENT

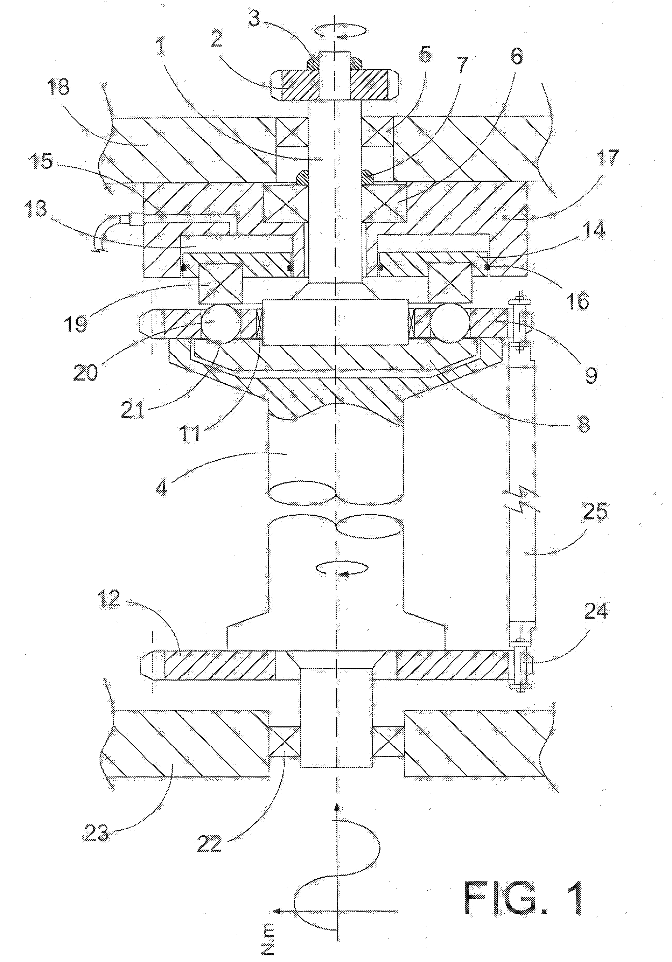

As Figure 1 shows, the transmission mechanism of the invention basically comprises a main shaft 1 attached at one of its ends to a transmission element 2, which receives and transmits an intermittent rotary movement to the main shaft 1, a transmission shaft 4 of a laminar sheet materials conveyor device, and a hydraulic and/or pneumatic proportional clutch 13,14,19,20, capable of coupling or decoupling this main shaft 1 and the transmission shaft 4.

The transmission element 2 is fixed to the main shaft 1 by means of a locking element 3.

The main shaft 1 rotates resting on rolling elements 5 and 6, the latter 6 at the same time carrying out a function of preventing lateral movements of the mechanism due to it is being fixed by a locking element 7.

Onto the other end of the main shaft 1 is fixed a positioning plate 8, attached to the main shaft 1 by securing means such as bolts.

A drive sprocket 9 is mounted freely rotating by means of a rolling element 11 on one end of the main shaft 1. At the same time, the transmission shaft 4 is attached by one end to the drive sprocket 9 and by the other end to another drive sprocket 12. This three-piece unit 4, 9 and 12 has the task of transmitting the movement to the laminar sheet materials conveyor device.

The positioning plate 8 is placed in a cavity that exists between the drive sprocket 9 and one end of the transmission shaft 4, while the positioning plate 8 and the drive sprocket 9 are arranged adjacent to one another.

The hydraulic and/or pneumatic proportional clutch comprises a pressure chamber 13 and a piston 14, the chamber 13 being fed via a conduit 15, though which a fluid and/or gas is introduced at the required pressure, which pressure is constantly adjustable by means of a hydraulic and/or pneumatic exterior circuit. In order to avoid pressure leakages in the chamber 13, the chamber is sealed using leaktightness devices 16.

The rest of the chamber 13 is made up of a casing 17, which acts as a support for the rolling element 6 and for attachment to a bedplate 18.

The clutch further has means of engaging and disengaging the clutch which include a load transmitting element 19 mounted rotating freely in a groove made in the piston 14, and a plurality of linking elements 20 mounted in contact with said load transmitting element 19.

Said linking elements 20 are placed respectively in through-orifices made in the drive sprocket 9.

The positioning plate 8 includes a plurality of housings 21 machined in the surface oriented towards the drive sprocket 9, in such a way that the linking elements 20 can slot into the housings 21 in order to link the positioning plate 8 with the drive sprocket 9.

These housings 21 are distributed along the surface of the positioning plate 8. The position, shape and number of housings 21 depends on the forces to be transmitted and the desired sensitivity to be obtained.

This housing 21 distribution is especially designed such that there is only one linkage position between the main shaft 1 and the drive sprocket 9.

The load transmitting element 19 has the task of transmitting a force F on the linking elements 20 coming from the pressure P set up in the chamber 13, and at the same time rotates about itself, thereby avoiding the piston 14 having to rotate as the force is transmitted.

Thanks to this arrangement the movement of the main shaft 1 is transmitted to the transmission shaft 4.

Furthermore, there is another rolling element 22 at the other end of the transmission shaft 4 which carries out support functions on the bedplate 23.

The drive sprockets 9 and 12 have the task of actuating chains 24 bearing clamp bars 25 that drag the sheets of laminar materials.

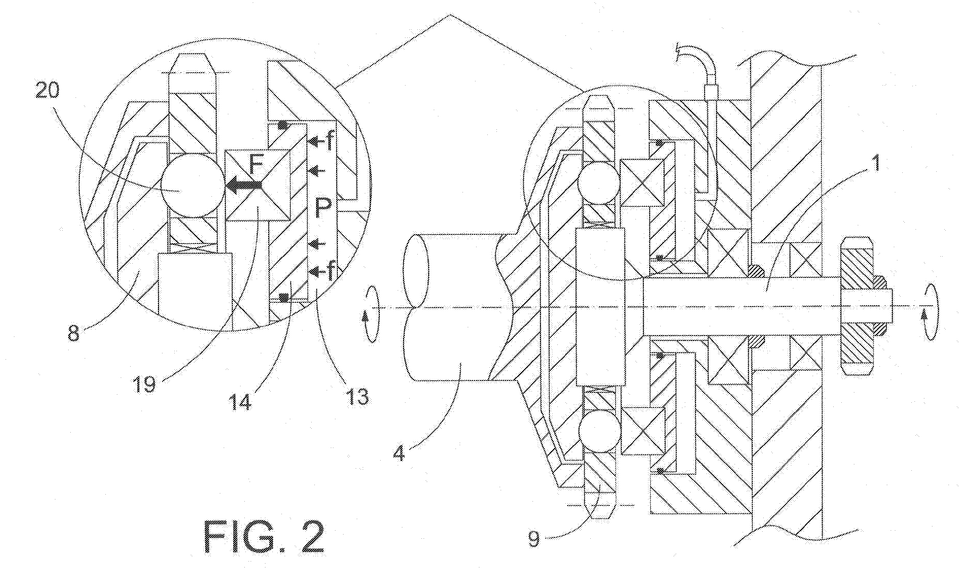

Figure 2 shows in detail the locations of the various elements that take part in generating the clutch torque. Like Figure 1, Figure 2 shows the clutch in engaged position.

As stated above, the function of the clutch is to provide at all times the necessary and correct torque for moving the unit formed by the drive sprocket 9 and transmission shaft 4 of the laminar sheet materials conveyor device.

Owing to the movement of said main shaft 1 being variable in speed within its 360° rotation, this sets up variations of the sinusoidal type, so that the torque to be transmitted varies in accordance with said parameters.

In order to be able to alter the torque to be transmitted in accordance with the movement, without any need to halt the mechanism, all that need be done is to alter the pressure value P of the chamber 13.

The pressure P of the fluid and/or gas in the chamber 13 generates a force "f" spread over the entire surface of the piston 14 in the chamber 13. The force "f" is absorbed by the rotary load transmitter 19 which spreads that force along the various linking elements 20, which receive the force F.

Owing to this force F, the linking elements 20 are fixed in the corresponding housings 21 of the positioning plate 8, thus absorbing the input torque from the main shaft 1 and transmitting it to the drive sprocket 9, and consequently to the transmission shaft 4.

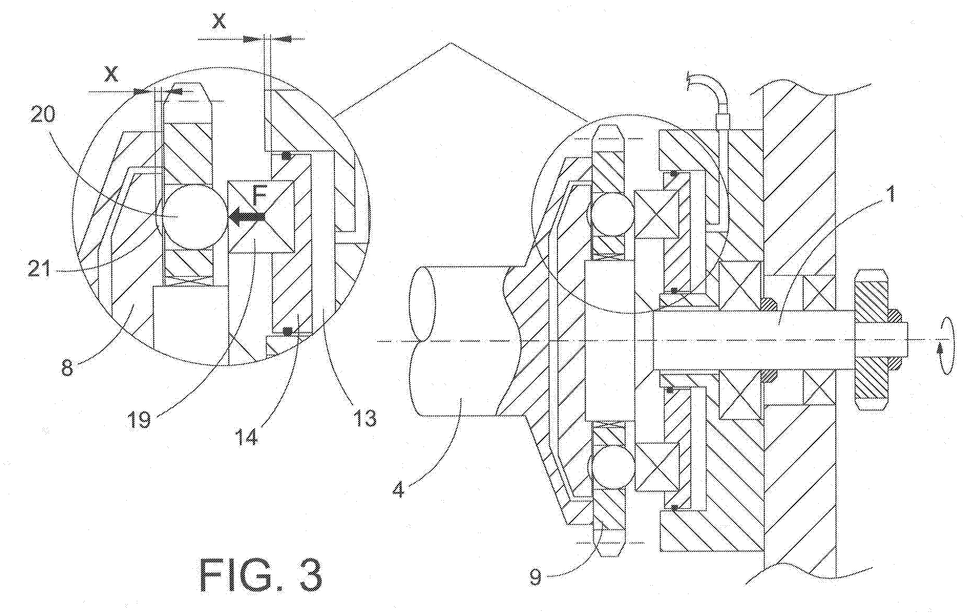

Figure 3 shows in detail the locations of the various elements when the mechanism is released.

If for any reason the unit formed by the drive sprocket 9 and the transmission shaft 4 of the laminar sheet materials conveyor device is locked or requires a torque exceeding the torque to which the clutch is set for its movement, the force F will not be able to keep the linking elements 20 inside the corresponding housings 21 of the positioning plate 8.

In that case, the linking elements 20 shift by a certain length "x", moving the rotary load transmitter 19 and then the piston 14 by the same length "x". At the instant this action is carried out the proportional clutch ceases to transmit load and the unit formed by the drive sprocket 9 and transmission shaft 4 no longer receives the movement from the main shaft 1.

## Claims

1. Adjustable torque transmission mechanism, especially for a laminar sheet materials conveyor device, that comprises a main shaft (1) attached to a transmission element (2) that imparts an intermittent rotary movement to the main shaft (1), a positioning plate (8) attached to the main shaft (1), a drive sprocket (9) attached to a transmission shaft (4) of the sheet conveyor device, and a coupling device (13,14,19,20) able to transmit the movement of the positioning plate (8) to the drive sprocket (9), **characterised in that** the coupling device is a hydraulic and/or pneumatic proportional clutch which includes a pressure chamber (13) fed with a fluid and/or gas at a constantly adjustable pressure (P) by means of a hydraulic and/or pneumatic exterior circuit, a piston (14) that moves in response to said pressure (P), and means of engaging or disengaging the clutch (19,20) associated with the piston (14), the positioning plate (8) and the drive sprocket (9), in such a way that the clutch permits at all times delivery of the torque required in function of the main shaft's (1) movement.

2. Mechanism, according to Claim 1, **characterised in that** the drive sprocket (9) is mounted freely rotating on one end of the main shaft (1) , by means of a rolling element (11).

3. Mechanism, according to Claim 1, **characterised in that** the positioning plate (8) is placed in a a cavity that exists between said drive sprocket (9) and one end of the transmission shaft (4).

4. Mechanism, according to Claim 3, **characterised in that** the positioning plate (8) and the drive sprocket (9) are arranged adjacent to one another.

5. Mechanism, according to Claim 1, **characterised in that** the pressure chamber (13) of the proportional clutch is fed via a conduit (15), through which the fluid and/or gas is introduced at the required pressure (P).

6. Mechanism, according to Claim 5, **characterised in that** the pressure chamber (13) includes leaktightness means (16) to avoid pressure leakages therein.

7. Mechanism, according to Claim 1, **characterised in that** the engaging and disengaging means of the proportional clutch include a load transmitting element (19) mounted so as to rotate freely in a groove made in the piston (14), and a plurality of linking elements (20) fitted in contact with said load transmitting element (19).

8. Mechanism, according to Claim 7, **characterised in that** said linking elements (20) are respectively housed in as many through-orifices made in the drive sprocket (9).

9. Mechanism, according to Claim 8, **characterised in that** the positioning plate (8) includes a plurality of housings (21) machined in the surface oriented towards the drive sprocket (9), in such a way that the linking elements (20) can slot into their respective housings (21) .

10. Mechanism, according to Claim 9, **characterised in that** the housings (21) are distributed along the surface of the positioning plate (8).

11. Mechanism, according to Claim 1, **characterised in that** the main shaft (1) rotates resting on first (5) and second (6) rolling elements.

12. Mechanism, according to Claim 11, **characterised in that** the second rolling element (6) is fixed by means of a locking element (7), thus preventing possible lateral movements of the mechanism.

13. Mechanism, according to Claim 1, **characterised in that** the rest of the pressure chamber (13) is made up of a casing (17).

14. Mechanism, according to Claims 11 to 13, **characterised in that** the casing (17) includes a housing for fitting of the main shaft's (1) second rolling element (6).

15. Mechanism, according to Claim 13, **characterised in that** the casing (17) is attached to a bedplate (18) .

16. Mechanism, according to Claim 2, **characterised in that** the transmission shaft (4) is attached at one end to the drive sprocket (9) and at the other end to a second drive sprocket (12).

17. Mechanism, according to Claim 16, **characterised in that** there is another rolling element (22) at the other end of the transmission shaft (4) which carries out support functions on a bedplate (23).

18. Mechanism, according to Claim 16, **characterised in that** the drive sprockets (9,12) actuate chains (24) bearing clamp bars (25) that drag the sheets of laminar materials.
